# FASCICULE DE BREVET EUROPEEN

(11) **EP 2 958 024 B1**
(45) Date de publication et mention de la délivrance du brevet: **16.12.2020**
(21) Numéro de dépôt: 15169569.9
(22) Date de dépôt: 28.05.2015
(51) Int. Cl.: G06F 12/0817, G06F 12/0888

(54) **RÉDUCTION DES ÉVICTIONS DANS LES RÉPERTOIRES DE GESTION DE MÉMOIRE CACHE**
REDUZIERUNG DER AUSSCHLÜSSE IN VERWALTUNGSVERZEICHNISSEN EINES CACHE-SPEICHERS
REDUCTION OF EVICTIONS IN THE MANAGEMENT DIRECTORIES OF CACHE MEMORY

(30) Priorité: 20.06.2014 FR 1455746
(43) Date de publication de la demande: 23.12.2015
(73) Titulaire: BULL SAS, 78340 Les Clayes sous Bois (FR)
(72) Inventeur: Palfer-Sollier, Thibaut, 92120 Montrouge (FR)
(74) Mandataire: Santarelli

(56) Documents cités:
- EP-A1- 2 088 511
- US-A1- 2012 079 214
- US-A1- 2014 082 297
- US-B1- 7 003 630

## Description

La présente invention concerne la gestion de la mémoire cache dans les systèmes informatiques multiprocesseurs.

Dans de tels systèmes, chaque processeur dispose d'une mémoire cache propre pour stocker des données de calcul, par exemple des adresses mémoire pointant vers des instructions à exécuter. Les processeurs fonctionnant en parallèle, ils partagent certaines de ces données. Ainsi, plusieurs processeurs peuvent avoir accès à une même donnée en lecture ou en écriture pour éventuellement la modifier et ainsi exécuter un programme informatique.

Afin d'assurer la mise à jour des données utilisées par les processeurs, et éviter que deux processeurs traitent deux versions différentes d'une même donnée, des algorithmes de « cohérence de cache » sont mis en œuvre. L'algorithme MESI est un exemple d'un tel algorithme.

La mise en œuvre d'algorithmes de cohérence de cache nécessite un grand nombre de communications entre les processeurs pour leur permettre de connaître à chaque instant, la localisation d'une donnée. Il s'agit de déterminer l'identification de la mémoire cache dans laquelle elle se trouve, ainsi que son état.

L'état d'une donnée en mémoire cache dépend du protocole utilisé. Dans l'exemple du protocole MESI donné si avant, une donnée est dans l'état « modifié » (M pour « modified » en anglais) si la donnée n'est présente que dans une seule mémoire cache et que cette donnée a été modifiée par rapport à celle présente en mémoire non-cache (d'où la donnée initiale provient). Dans ce cas, le processeur qui souhaite avoir accès à la donnée peut par exemple attendre qu'elle soit mise en conformité avec la version en mémoire. Certains protocoles de cohérence de cache peuvent toutefois autoriser les transferts de données modifiées directement de cache à cache.

Toujours dans le même exemple, une donnée est dans l'état « exclusif » (E pour « exclusive » en anglais), si la donnée n'est présente que dans une seule mémoire cache et que cette donnée correspond bien à la version en mémoire non-cache. Une donnée est dans l'état « partagé » (S pour « shared » en anglais) si la donnée est présente dans plusieurs mémoires cache. Enfin, une donnée est dans l'état « invalide » (I pour « invalid » en anglais) si la donnée n'est pas à jour. Elle doit alors être ignorée par les processeurs et ne pas être utilisée.

D'autres protocoles existent avec plus ou moins d'états définis. Par exemple le protocole MSI ne comporte que les trois états M, S et I définis ci-dessus alors que le protocole MOESI ajoute un état « détenu » (O pour « owned » en anglais) équivalent à un état « S » mais pour lequel la mémoire n'est pas à jour.

La plupart des protocoles de cohérence de cache mettent en œuvre des listes, ou répertoires, reflétant l'historique des demandes faites sur chaque donnée. Ce type de protocole est dit « directory-based » en terminologie anglo-saxonne.

Chaque processeur tient une liste qui pour chaque ligne de mémoire cache, indique les processeurs auprès desquels la donnée qui y est inscrite est stockée ainsi que son état. Cette liste peut être plus ou moins complète en ce qui concerne les informations qu'elle contient.

L'utilisation de cette liste permet de garder auprès des processeurs un historique des demandes de la part des processeurs par rapport à une donnée. Cela permet notamment de filtrer les interrogations du cache, en évitant par exemple d'interroger le cache d'un processeur qui n'a pas manipulé une donnée. En outre, si une donnée n'apparaît pas dans les listes des processeurs, il peut en être déduit que la donnée n'est pas en cours d'utilisation par un processeur et qu'elle est donc stockée en mémoire (non cache) et à jour.

La publication US 2012/079214 A1 décrit un procédé de gestion de cohérence de cache par répertoire. La figure **1** illustre schématiquement un système multiprocesseurs.

Le système comporte quatre modules 100, 110, 120, 130. Chaque module comporte une pluralité de processeurs. Le module 100 comporte deux processeurs 101 et 102. Le module 110 comporte deux processeurs 111 et 112. Le module 120 comporte deux processeurs 121 et 122. Le module 130 comporte deux processeurs 131 et 132. Chaque processeur dispose d'une mémoire cache respective. Ces mémoires cache ne sont pas représentées.

Le nombre de modules dans le système et le nombre de processeurs dans les modules est purement illustratif. Les modules peuvent contenir des nombres de processeurs différents.

Afin de gérer les communications entre les différents processeurs, notamment pour gérer la cohérence de cache, chaque module 100, 110, 120, 130 dispose d'un module proxy 103, 113, 123, 133 respectif. Dans un souci de clarté, les interconnexions entre les modules proxy ne sont pas représentées.

Ainsi, chaque processeur dispose d'une unique interface pour communiquer avec les autres processeurs. Tout se passe comme si chaque processeur ne s'adressait à chaque fois qu'à un seul autre processeur. En particulier, les modules proxy tiennent des répertoires pour le compte des processeurs de leurs modules respectifs. Les modules proxy peuvent aussi tenir un répertoire pour le compte de processeurs en dehors de leurs modules respectifs.

L'utilisation de modules proxy s'avère nécessaire lorsque le nombre de processeurs du système devient important.

Cependant, les répertoires tenus par les modules proxy ne sont pas identiques à ceux qui peuvent être tenus par les processeurs. En effet, dès lors qu'un certain nombre de processeurs sont présents dans un module, la taille du répertoire deviendrait trop importante. Notamment, l'espace du module proxy sur le silicium deviendrait gênante.

Les modules proxy tiennent donc un type de répertoire particulier qualifié « d'inclusif ». Il s'agit en fait de tenir une liste comportant uniquement les adresses pointant vers une donnée valide, c'est-à-dire, dans l'exemple du protocole MESI, les données qui sont soit à l'état « modifié », « partagé » ou « exclusif ». Si une adresse pointe vers une donnée « invalide » (toujours dans l'exemple du protocole MESI), elle n'est pas listée dans le répertoire, le processeur souhaitant y accéder devra donc interroger la mémoire non cache.

Ainsi, les répertoires des modules proxy nécessitent des mises à jour régulières et fréquentes afin d'y introduire de nouvelles adresses, par exemple lorsqu'un processeur a besoin d'y accéder en lecture. La taille des répertoires étant limitée, cette mise à jour nécessite donc de sortir une adresse précédemment stockée.

Cette opération de suppression d'une adresse dans le répertoire est appelée « éviction ». Dans la suite, on pourra désigner cette opération par l'acronyme « BINV » (pour « back invalidation » en terminologie anglo-saxonne).

L'opération d'éviction pose des problèmes à plus d'un titre.

En particulier, des problèmes surviennent lorsque les données manipulées représentent des instructions d'un programme informatique. Lors de l'exécution de tels programmes, les processeurs procèdent à des pré-chargements d'instructions, ou « pre-fetch » en terminologie anglo-saxonne. Il s'agit de charger une instruction qui n'est pas encore appelée à être exécutée, mais dont le processeur sait, ou devine qu'elle ne tardera pas à l'être.

Ainsi, si une opération d'éviction porte sur une adresse pointant vers une instruction pré-chargée, on force le processeur à attendre qu'elle soit chargée à nouveau ce qui retarde l'exécution du programme (alors qu'initialement, le pré-chargement devait accélérer l'exécution).

L'opération d'éviction peut aussi poser problème lorsque l'adresse pointe vers une donnée et non une instruction.

Il existe donc un besoin pour réduire les opérations d'éviction dans les systèmes multiprocesseurs.

La présente invention s'inscrit dans ce cadre.

Un **premier aspect** de l'invention concerne un module de gestion de cohérence de cache par répertoire dans un système multiprocesseur, dans lequel chaque donnée stockée en mémoire cache est associée à un état parmi une pluralité d'états, dont au moins un état reflétant un partage de donnée entre une pluralité de processeurs comportant :
- une unité de stockage pour stocker un répertoire comportant une liste d'adresses de mémoire cache, chaque adresse pouvant être associée à l'un parmi une pluralité d'états correspondant à l'état de la donnée disponible à ladite chaque adresse, et
- une unité de traitement configurée pour mettre à jour ladite liste, ladite unité de traitement étant configurée pour ne pas lister dans ladite liste, les lignes d'adresse relatives à des données associées audit premier état reflétant un partage de donnée entre une pluralité de processeurs.

Un module selon le premier aspect permet aux systèmes multiprocesseurs da gagner en performance en réduisant sensiblement le nombre d'opérations d'évictions.

Par exemple, ladite unité de traitement est configurée pour ne lister uniquement que les adresses relatives à des données associées à un état reflétant l'exclusivité desdites données à des processeurs respectifs.

Selon des réalisations, ladite unité de traitement est configurée pour fonctionner sélectivement selon au moins deux modes :
- un premier mode de fonctionnement dans lequel les lignes d'adresse associées audit premier état ne sont pas listées dans ladite liste, et
- un deuxième mode de fonctionnement dans lequel les lignes d'adresse associées audit premier état sont listées dans ladite liste.

Par exemple, dans ledit premier mode de fonctionnement, seules sont stockées les adresses relatives à des données associées à un état reflétant l'exclusivité desdites données à des processeurs respectifs.

Un **deuxième aspect** de l'invention concerne un dispositif multiprocesseur comportant :
- une pluralité de processeurs,
- une pluralité de modules de mémoire cache respectivement associés auxdits processeurs, et
- au moins un module proxy selon le premier aspect, configuré pour gérer la cohérence de cache entre lesdits modules de mémoire cache.

Un **troisième aspect** de l'invention concerne une procédé de gestion de cohérence de cache par répertoire dans un système multiprocesseur, dans lequel chaque donnée stockée en mémoire cache est associée à un état parmi une pluralité d'états, dont au moins un premier état reflétant un partage de donnée entre une pluralité de processeurs, le procédé comportant les étapes suivantes de:
- réception d'une requête relative à une donnée en mémoire cache,
- détermination de l'état de ladite donnée,
- lancement d'une mise à jour d'un répertoire comportant une liste d'adresses de mémoire cache, chaque adresse pouvant être associée à l'un parmi une pluralité d'états correspondant à l'état de la donnée disponible à ladite chaque adresse, si ledit état déterminé est au moins un deuxième état différent dudit premier état, et
- lancement d'une interrogation de mémoire cache pour obtenir ladite donnée si ledit état déterminé est au moins ledit premier état reflétant un partage de donnée entre une pluralité de processeurs, sans mise à jour dudit répertoire.

Par exemple, ledit deuxième état est un état reflétant l'exclusivité de ladite donnée à un processeur.

Selon des réalisations, ladite mise à jour est lancée seulement si ledit deuxième état est un état reflétant l'exclusivité de ladite donnée à un processeur

Par exemple, ladite mise à jour comporte une étape d'éviction d'une ligne d'adresse dudit répertoire.

Selon des réalisations, le procédé comporte en outre une étape préalable de détermination d'un mode de fonctionnement pour déterminer si les lignes d'adresse relatives à des données associées audit premier état reflétant un partage de donnée entre une pluralité de processeurs doivent être ou non listées dans ladite liste.

D'autres caractéristiques et avantages de l'invention apparaîtront à la lecture de la présente description détaillée qui suit, à titre d'exemple non limitatif, et des figures annexées parmi lesquelles :
- la **figure 2** illustre un répertoire selon des modes de réalisation,
- la **figure 3** illustre une utilisation de répertoire selon des modes de réalisation, et
- la **figure 4** illustre schématiquement un module proxy 40 selon des modes de réalisation.

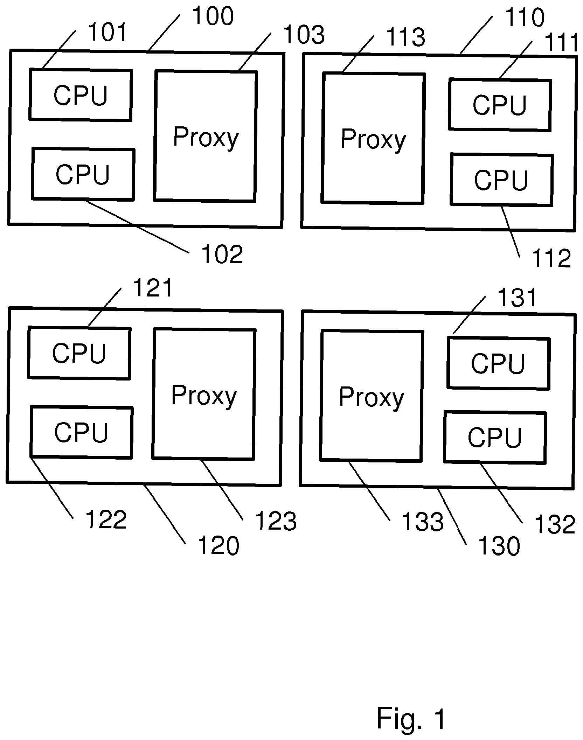

Un système selon des modes de réalisation peut avoir la structure déjà présentée en référence à la **figure 1****.** Cependant, la structure et la gestion du répertoire des modules proxy diffèrent comme décrit ci-après.

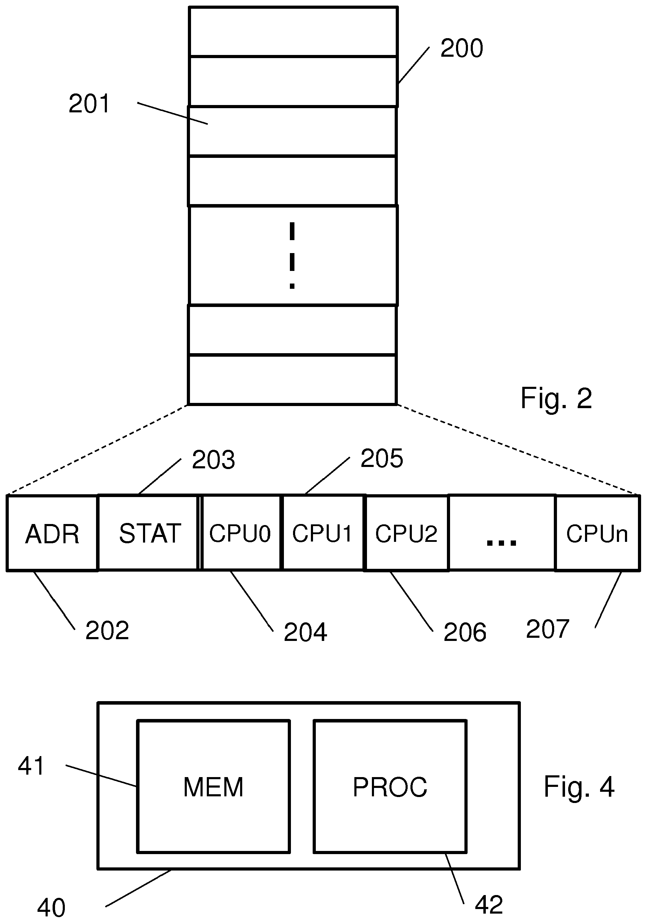

La **figure 2** illustre un répertoire pour la mise en œuvre d'une gestion de cohérence de mémoire cache selon des modes de réalisation.

Le répertoire 200 comporte une pluralité de lignes 202 respectivement associées à des données stockées dans les mémoires cache du système.

Chaque ligne identifie une adresse mémoire 202 à laquelle est stockée une donnée représentée dans le répertoire, un état associé à la donnée, et une liste des processeurs 204, 205, 206, 207 qui ont récemment demandé l'accès à la donnée.

L'adresse 202 peut être plus ou moins complète. Afin d'économiser de l'espace mémoire pour stocker le répertoire, il est possible d'envisager de ne stocker qu'une partie de l'adresse mémoire.

L'état de la donnée 203 est l'état dans lequel se trouve actuellement la donnée. Elle peut se trouver dans une pluralité d'états. Selon l'invention, les données dans un état de partage entre plusieurs processeurs ne sont pas stockées dans le répertoire. Ainsi, l'état « partagé » n'apparaît pas dans le répertoire. En outre, les données non valides peuvent ne pas être représentées non plus dans le répertoire. Ainsi, l'état « invalide » peut ne pas apparaître dans le répertoire. D'autres types d'états peuvent apparaître, comme par exemple les états « exclusif » ou « modifié ». Selon des modes de réalisation, seule l'état « exclusif » est représenté. Le protocole de gestion de mémoire cache utilisé peut être de type MESI, MOESI, MSI ou autre.

La liste 204, 205, 206, 207 des processeurs ayant demandé l'accès à la donnée peut être plus ou moins détaillée. Chaque processeur peut être identifié par un identifiant seul. L'identifiant peut aussi être accompagné de l'état dans lequel le processeur a demandé l'accès à la donnée. Par exemple, la liste des processeurs est classée dans l'ordre chronologique (ou l'inverse) des demandes d'accès, par exemple de gauche à droite (ou l'inverse). Les demandes les plus anciennes peuvent être remplacées par les demandes les plus récentes afin de ne stocker qu'un nombre limité de processeurs dans cet historique d'accès et ainsi économiser de l'espace mémoire.

Selon l'art antérieur, on trouverait dans le répertoire des lignes correspondant à des données partagées alors que selon l'invention, les données dans cet état sont absentes du répertoire. Les modules de gestion de répertoire de cache des systèmes selon des modes de réalisation sont configurés pour ne pas stocker de telles données dans le répertoire.

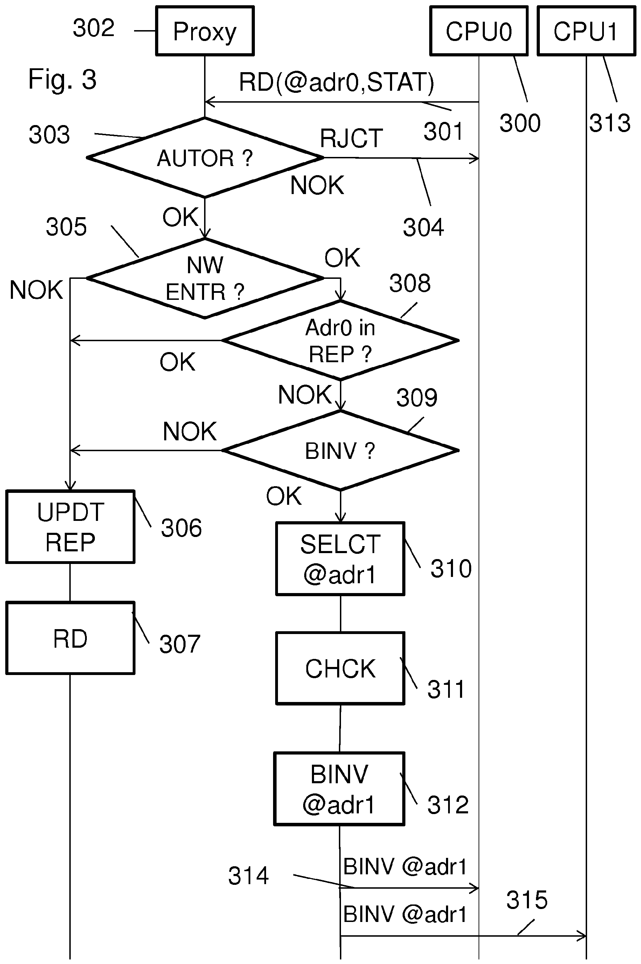

Une utilisation d'un répertoire pour la gestion de mémoire cache est présentée en référence à la **figure 3****.**

Un processeur 300 fait une demande 301, par exemple en lecture, concernant une donnée à l'adresse adr0 en mémoire cache, dans un état donné STAT (par exemple « partagé » S, « exclusif » E ou autre). Cette demande est envoyée au module proxy 302.

Le module proxy vérifie alors si le traitement de cette requête est autorisé (ou possible) lors d'une étape 303. Le proxy vérifie par exemple que toutes les ressources nécessaires au traitement de la requête sont disponibles, le répertoire en est notamment une. Cependant, la disponibilité d'autres ressources (identifiant de transaction ou autre...) peut être vérifiée.

Si le traitement n'est pas autorisé (NOK), le module proxy peut par exemple renvoyer au processeur 300 un message de rejet 304. Cependant, d'autres mesures peuvent être prises comme par exemple attendre la libération de toutes les ressources nécessaires.

Sinon, le traitement est autorisé (OK), et il est vérifié lors de l'étape 305 si une nouvelle entrée est nécessaire dans le répertoire. En effet, seules les transactions impliquant le passage à un état géré par le répertoire nécessitent une entrée. Par exemple, les transactions purement invalidantes (consistant à invalider la donnée dans tous les caches) n'ont pas besoin d'entrée de répertoire. La donnée finit en état I (invalide) et le répertoire ne liste pas les données dans cet état.

Dans le cas où il est déterminé qu'une entrée n'est pas nécessaire (NOK), le répertoire est alors mis à jour lors d'une étape 306 en ajoutant le processeur 300 à la liste des processeurs ayant demandé l'accès à la donnée. Par exemple, l'identifiant du processeur 300 est ajouté à la suite des processeurs déjà listés. Alternativement, au lieu d'ajouter tout de suite le processeur dans le répertoire, l'entrée dans le répertoire peut être réservée et il peut être attendu le retour de la donnée pour faire la mise à jour complète du répertoire.

L'étape 306 est ainsi exécutée lorsque l'adresse mémoire concernée est déjà présente dans le répertoire suite à son inscription lors du traitement d'une requête précédente lors duquel il a été déterminé qu'une entrée était nécessaire (OK) à l'étape 305.

Une fois l'étape 306 exécutée, le processus de lecture normal est initié lors de l'étape 307. Par exemple, une requête en lecture est envoyée à l'agent gérant la mémoire (ou celui qui la représente s'il faut passer par un deuxième proxy). La donnée est ensuite reçue en réponse. Le processus au niveau de l'agent gérant la mémoire (accès à la mémoire centrale, interrogation des autres caches ou autre), n'intéresse pas directement l'émetteur de la lecture (indirectement, des cas de conflit peuvent lui être rendus visibles).

De retour à l'étape 305, dans le cas où il est déterminé qu'une entrée n'est pas nécessaire (NOK), par exemple parce que la donnée demandée est en partage (ou dans l'état invalide) et que ce type de donnée n'est pas représenté dans le répertoire, l'étape 306 n'est pas mise en œuvre et on passe à l'étape 307 de lecture. Par exemple, une requête en lecture est envoyée à l'agent gérant la mémoire (ou celui qui la représente s'il faut passer par un deuxième proxy). La donnée est ensuite reçue en réponse. Il peut être passé directement à l'étape 307 de lecture. Alternativement, cette étape peut être précédée d'une interrogation de tous les caches des processeurs si par exemple la requête demande à avoir l'exclusivité sur la donnée (dans ce cas, il faut invalider toutes les copies de la donnée).

Si à l'étape 305, il est déterminé qu'une nouvelle entrée est nécessaire pour la donnée à l'adresse adr0 (OK), il est déterminé lors d'une étape 308, si l'adresse adr0 est déjà présente dans le répertoire.

En effet, si une transaction a besoin d'une entrée dans le répertoire mais que cette entrée existe déjà (OK), c'est-à-dire qu'une précédente transaction à la même adresse l'a déjà initialisée, elle réutilise cette entrée et n'a donc pas besoin d'en réallouer une. Il n'y a donc pas d'éviction dans ce cas.

Le processus continue alors avec l'étape 306 pour mettre à jour cet état et poursuivre la lecture. Sinon (NOK), l'adresse n'est pas dans le répertoire et il est vérifié lors d'une étape 309, s'il est besoin de réaliser une éviction d'une adresse déjà présente dans le répertoire.

S'il reste de l'espace disponible dans le répertoire (NOK), l'éviction n'est pas nécessaire et le processus continue avec l'étape 306 pour ajouter une ligne au répertoire avec l'adresse concernée, l'état de la donnée et l'identifiant du processeur 300. Sinon (OK), il ne reste plus assez d'espace disponible et il faut lancer une éviction.

Une adresse adr1 à supprimer est sélectionnée lors de l'étape 310. Par exemple, une adresse aléatoire est sélectionnée. Par exemple encore, l'adresse la plus ancienne (« *least recently used* » en anglais) est sélectionnée. D'autres types d'adresse peuvent être sélectionnés. Si aucune adresse ne peut être sélectionnée, car toutes sont en cours d'utilisation, le processus peut se mettre en attente de la libération d'une adresse. Alternativement, le processus peut émettre une demande de « ré-essai » (« *retry* » en terminologie anglo-saxonne) à l'émetteur de la requête.

Il est ensuite procédé à une série de vérifications et d'allocations nécessaires à la suite des opérations lors d'une étape 311. Il est notamment vérifié que toutes les ressources nécessaires au traitement de l'éviction sont disponibles.

L'invalidation est ensuite mise en œuvre lors de l'étape 312 en mettant la donnée à l'adresse adr1 à l'état « invalide ».

Le processus de lecture se poursuit ensuite normalement.

Supposons, pour les besoins de l'illustration, que le répertoire utilisé est selon l'art antérieur et qu'il stocke les données partagées. Supposons aussi que la donnée à l'adresse adr1 est une donnée partagée entre le processeur 300 et un autre processeur 313. Le module proxy envoie alors des messages 314 et 315 pour les informer du nouvel état de la donnée.

On voit alors ici que la lecture de la donnée à l'adresse adr0 a provoqué l'invalidation d'une donnée à l'adresse adr1 qui était partagée par plusieurs processeurs. Cette donnée à l'adresse adr1 était par exemple une instruction pré-chargée par le processeur 300 avec un processeur 313. Lorsque ces processeurs vont vouloir accéder à l'instruction pour l'exécuter, ils ne pourront pas le faire et devront relancer un accès. Cela augmente la latence du système et pénalise la vitesse d'exécution des instructions par le système.

Par contre, si le répertoire utilisé est selon l'invention, le cas de figure ci-dessus ne peut pas se produire puisque le répertoire ne stocke pas les données partagées. La donnée à l'adresse adr1 ne peut pas être une donnée partagée. Elle peut par exemple être une donnée à l'état « exclusif » ou « modifiée » par exemple.

Dans le cas d'un répertoire selon l'invention, seul le message 314 est envoyé vers le processeur 300 qui détient la donnée. Il n'y a pas lieu de transmettre le message 315.

La personne du métier verrait un inconvénient à ne plus représenter les données partagées dans le répertoire comme proposé. En effet, cela implique de procéder systématiquement à une interrogation de toutes les mémoires cache du système lorsqu'un processeur souhaite accéder à une donnée partagée.

Cependant, les inventeurs ont constaté que cet inconvénient est largement compensé par les gains en performance apportés par la suppression des évictions sur des données en partage. Par exemple, les données partagées sont typiquement des instructions, et comme il l'a déjà été évoqué, réaliser des évictions sur des instructions pénalise beaucoup le système.

En outre, en ne représentant plus les données partagées, il est possible, à taille de répertoire constante, de stocker un nombre plus grand de données dans les autres états. On augmente ainsi virtuellement la taille du répertoire tout en économisant sur la surface occupée par le répertoire sur le silicium du système.

Selon des réalisations, il est possible de ne stocker dans le répertoire que les données dans un état d'exclusivité. Cela permet de diminuer encore les évictions.

Selon des modes de réalisation, il est possible de prévoir plusieurs modes de fonctionnement du système. Dans un mode de fonctionnement, les données partagées ne sont pas représentées dans le répertoire. Dans un autre mode de fonctionnement, ces données sont listées.

On peut prévoir de passer sélectivement d'un mode à l'autre, par exemple en fonction de l'application dans laquelle est utilisé le processeur.

Ainsi, la décision d'utiliser un répertoire inclusif classique (où les états « partagé » et « exclusif » peuvent être listés) ou un répertoire inclusif selon des modes de réalisation (où par exemple seul l'état « exclusif » est listé) peut être modifiée dynamiquement, par exemple via un registre de configuration. Ce mode de fonctionnement sélectif permet de choisir le mode le plus adapté en fonction de l'application mise en œuvre. Cela évite également de devoir prendre une décision au moment de la conception du module de gestion qui serait irrévocable par la suite.

La **figure 4** illustre schématiquement un module proxy 40 selon des modes de réalisation. Il comporte une mémoire 41 pour stocker un répertoire de gestion de mémoire cache. Il comporte en outre une unité de traitement 42 pour gérer les interrogations de la part de processeurs d'un système multiprocesseurs selon une gestion de mémoire cache par répertoire.

La présente invention a été décrite et illustrée dans la présente description détaillée en référence aux figures jointes. La présente invention est définie par les revendications indépendantes jointes auxquelles il convient de se référer. Des caractéristiques avantageuses sont exposées dans les revendications dépendantes.

## Revendications

1. Module (40) de gestion de cohérence de cache par répertoire dans un système multiprocesseur mettant en œuvre un mécanisme d'éviction, dans lequel chaque donnée stockée en mémoire cache est associée à un état parmi une pluralité d'états, dont au moins un premier état reflétant un partage de donnée entre une pluralité de processeurs comportant :
- une unité de stockage (41) pour stocker un répertoire comportant une liste d'adresses de mémoire cache, chaque adresse pouvant être associée à l'un parmi une pluralité d'états correspondant à l'état de la donnée disponible à ladite chaque adresse, et
- une unité de traitement (42) configurée pour mettre à jour ladite liste, ladite unité de traitement étant configurée pour ne pas lister dans ladite liste, les lignes d'adresse relatives à des données associées audit premier état reflétant un partage de donnée entre une pluralité de processeurs,
**caractérisé en ce que** l'unité de traitement (42) est configurée pour fonctionner sélectivement selon au moins deux modes :
- un premier mode de fonctionnement dans lequel les lignes d'adresse associées audit premier état ne sont pas listées dans ladite liste, et
- un deuxième mode de fonctionnement dans lequel les lignes d'adresse associées audit premier état sont listées dans ladite liste ;
**en ce que** l'unité de traitement (42) est en outre configurée pour mettre en œuvre un mécanisme d'éviction d'une ligne d'adresse dudit répertoire,
et **en ce que** la donnée associée au premier état est une instruction pré-chargée par une pluralité de processeurs.

2. Module selon la revendication 1, dans lequel ladite unité de traitement est configurée pour ne lister uniquement que les adresses relatives à des données associées à un état reflétant l'exclusivité desdites données à des processeurs respectifs.

3. Module selon la revendication 2, dans lequel dans ledit premier mode de fonctionnement, seules sont stockées les adresses relatives à des données associées à un état reflétant l'exclusivité desdites données à des processeurs respectifs.

4. Dispositif multiprocesseur comportant :
- une pluralité de processeurs,
- une pluralité de modules de mémoire cache respectivement associés auxdits processeurs, et
- au moins un module proxy selon l'une des revendications précédentes, configuré pour gérer la cohérence de cache entre lesdits modules de mémoire cache.

5. Procédé de gestion de cohérence de cache par répertoire dans un système multiprocesseur mettant en œuvre un mécanisme d'éviction, dans lequel chaque donnée stockée en mémoire cache est associée à un état parmi une pluralité d'états, dont au moins un premier état reflétant un partage de donnée entre une pluralité de processeurs, le procédé comportant les étapes suivantes de:
- réception (301) d'une requête relative à une donnée en mémoire cache,
- détermination (305) de l'état de ladite donnée,
- lancement (306) d'une mise à jour d'un répertoire comportant une liste d'adresses de mémoire cache, chaque adresse pouvant être associée à l'un parmi une pluralité d'états correspondant à l'état de la donnée disponible à ladite chaque adresse, si ledit état déterminé est au moins un deuxième état différent dudit premier état, et
- lancement (307) d'une interrogation de mémoire cache pour obtenir ladite donnée si ledit état déterminé est au moins ledit premier état reflétant un partage de donnée entre une pluralité de processeurs, sans mise à jour dudit répertoire ;
**caractérisé en ce qu'**il comprend une étape préalable de détermination d'un mode de fonctionnement pour déterminer si les lignes d'adresse relatives à des données associées audit premier état reflétant un partage de donnée entre une pluralité de processeurs doivent être ou non listées dans ladite liste,
**en ce que** ladite mise à jour comporte une étape d'éviction (312) d'une ligne d'adresse dudit répertoire,
et **en ce que** la donnée associée au premier état est une instruction pré-chargée par une pluralité de processeurs.

6. Procédé selon la revendication 5, dans lequel ledit deuxième état est un état reflétant l'exclusivité de ladite donnée à un processeur.

7. Procédé selon la revendication 6, dans lequel ladite mise à jour est lancée seulement si ledit deuxième état est un état reflétant l'exclusivité de ladite donnée à un processeur.

## Patentansprüche

1. Modul (40) zur Cache-Kohärenzverwaltung durch ein Verzeichnis in einem Multiprozessorsystem, das einen Ausschlussmechanismus einsetzt, wobei jeder im Cache-Speicher gespeicherte Eintrag einem Zustand unter mehreren Zuständen zugeordnet ist, wovon mindestens ein erster Zustand eine gemeinsame Nutzung von Daten zwischen mehreren Prozessoren widerspiegelt, die umfassen:
- eine Speichereinheit (41), um ein Verzeichnis zu speichern, das eine Liste von Cache-Speicheradressen umfasst, wobei jede Adresse einem unter mehreren Zuständen entsprechend dem Zustand des an dieser jeden Adresse verfügbaren Eintrags zugeordnet werden kann, und
- eine Verarbeitungseinheit (42), die dazu konfiguriert ist, die Liste zu aktualisieren, wobei die Verarbeitungseinheit dazu konfiguriert ist, in der Liste die Adressenzeilen, die sich auf die Einträge beziehen, die dem ersten Zustand zugeordnet sind, der eine gemeinsame Nutzung von Daten zwischen mehreren Prozessoren widerspiegelt, nicht aufzulisten,
**dadurch gekennzeichnet, dass** die Verarbeitungseinheit (42) dazu konfiguriert ist, selektiv nach mindestens zwei Operationsmodi zu arbeiten:
- einem ersten Operationsmodus, in dem die Adressenzeilen, die dem ersten Zustand zugeordnet sind, nicht in der Liste aufgelistet sind, und
- einem zweiten Operationsmodus, in dem die Adressenzeilen, die dem ersten Zustand zugeordnet sind, in der Liste aufgelistet sind;
und dass die Verarbeitungseinheit (42) darüber hinaus dazu konfiguriert ist, einen Ausschlussmechanismus für eine Adressenzeile des Verzeichnisses einzusetzen,
und dass der Eintrag, der dem ersten Zustand zugeordnet ist, eine durch mehrere Prozessoren vorab geladene Anweisung ist.

2. Modul nach Anspruch 1, wobei die Verarbeitungseinheit dazu konfiguriert ist, einzig die Adressen aufzulisten, die sich auf Einträge beziehen, die einem Zustand zugeordnet sind, der die Ausschließlichkeit der Einträge für jeweilige Prozessoren widerspiegelt.

3. Modul nach Anspruch 2, wobei im ersten Operationsmodus nur die Adressen gespeichert werden, die sich auf Einträge beziehen, die einem Zustand zugeordnet sind, der die Ausschließlichkeit der Einträge für jeweilige Prozessoren widerspiegelt.

4. Multiprozessorvorrichtung, umfassend:
- mehrere Prozessoren,
- mehrere Cache-Speichermodule, die jeweils den Prozessoren zugeordnet sind, und
- mindestens ein Proxy-Modul nach einem der vorhergehenden Ansprüche, das dazu konfiguriert ist, die Cache-Kohärenz zwischen den Cache-Speichermodulen zu verwalten.

5. Verfahren zur Cache-Kohärenzverwaltung durch ein Verzeichnis in einem Multiprozessorsystem, das einen Ausschlussmechanismus einsetzt, wobei jeder im Cache-Speicher gespeicherte Eintrag einem Zustand unter mehreren Zuständen zugeordnet ist, wovon mindestens ein erster Zustand eine gemeinsame Nutzung von Daten zwischen mehreren Prozessoren widerspiegelt, wobei das Verfahren die folgenden Schritte umfasst:
- Empfangen (301) einer Anforderung, die sich auf einen Eintrag im Cache-Speicher bezieht,
- Bestimmen (305) des Zustands des Eintrags,
- Starten (306) einer Aktualisierung eines Verzeichnisses, das eine Liste von Cache-Speicheradressen umfasst, wobei jede Adresse einem unter mehreren Zuständen entsprechend des an dieser jeden Adresse verfügbaren Zustand zugeordnet werden kann, wenn der bestimmte Zustand mindestens ein zweiter Zustand ist, der sich vom ersten Zustand unterscheidet, und
- Starten (307) einer Cache-Speicherabfrage, um den Eintrag zu erhalten, wenn der bestimmte Zustand mindestens der erste Zustand ist, der eine gemeinsame Nutzung von Daten zwischen mehreren Prozessoren widerspiegelt, ohne Aktualisierung des Verzeichnisses;
**dadurch gekennzeichnet, dass** es einen vorläufigen Schritt zur Bestimmung eines Operationsmodus umfasst, um zu bestimmen, ob die Adressenzeilen, die sich auf Einträge beziehen, die dem ersten Zustand zugeordnet sind, der eine gemeinsame Nutzung von Daten zwischen mehreren Prozessoren widerspiegelt, in der Liste gelistet oder nicht gelistet werden sollen,
dass die Aktualisierung einen Schritt eines Ausschlusses (312) einer Adressenzeile des Verzeichnisses umfasst,
und dass der Eintrag, der dem ersten Zustand zugeordnet ist, eine durch mehrere Prozessoren vorab geladene Anweisung ist.

6. Verfahren nach Anspruch 5, wobei der zweite Zustand ein Zustand ist, der die Ausschließlichkeit des Eintrags für einen Prozessor widerspiegelt.

7. Verfahren nach Anspruch 6, wobei die Aktualisierung nur gestartet wird, wenn der zweite Zustand ein Zustand ist, der die Ausschließlichkeit des Eintrags für einen Prozessor widerspiegelt.

## Claims

1. Module (40) for directory-based cache coherence management in a multiprocessor system implementing an eviction mechanism, in which each data item stored in cache memory is associated with a state from among a plurality of states, at least one of which is a first state reflecting data sharing between a plurality of processors comprising:
- a storage unit (41) for storing a directory comprising a list of cache memory addresses, it being possible for each address to be associated with a state from among a plurality of states corresponding to the state of the data item available at each address, and
- a processing unit (42) configured to update said list, said processing unit being configured in order not to list in said list, the address lines that are relative to data associated with said first state reflecting data sharing between a plurality of processors,
**characterized in that** the processing unit (42) is configured to operate selectively in at least two modes:
- a first operating mode in which the address lines associated with said first state are not listed in said list, and
- a second operating mode in which the address lines associated with said first state are listed in said list;
**in that** the processing unit (42) is furthermore configured to implement an eviction mechanism for an address line of said directory,
and **in that** the data item associated with the first state is an instruction pre-loaded by a plurality of processors.

2. Module according to claim 1, in which said processing unit is configured so as to list only the addresses relative to data associated with a state reflecting the exclusivity of said data to respective processors.

3. Module according to claim 2, in which in said first operating mode, there are only stored the addresses relative to data associated with a state reflecting the exclusivity of said data to respective processors.

4. Multiprocessor device comprising:
- a plurality of processors,
- a plurality of cache memory modules respectively associated with said processors, and
- at least one proxy module according to one of the preceding claims, configured to manage the cache coherence between said cache memory modules.

5. Method for directory-based cache coherence management in a multiprocessor system implementing an eviction mechanism, in which each data item stored in cache memory is associated with a state from among a plurality of states, at least one of which is a first state reflecting data sharing between a plurality of processors, the method comprising the following steps of:
- receiving (301) a request relative to a data item in cache memory,
- determining (305) the state of said data item,
- launching (306) an update of a directory comprising a list of cache memory addresses, it being possible for each address to be associated with a state from among a plurality of states corresponding to the state of the data item available at each address, if said determined state is at least a second state different from said first state, and
- launching (307) a cache memory query to obtain said data item if said determined state is at least said first state reflecting data sharing between a plurality of processors, without updating said directory;
**characterized in that** it comprises a prior step of determining an operating mode to determine whether or not the address lines relative to data associated with said first state reflecting data sharing between a plurality of processors must be listed in said list,
**in that** said updating comprises a step of evicting (312) an address line of said directory,
and **in that** the data item associated with the first state is an instruction pre-loaded by a plurality of processors.

6. Method according to claim 5, in which said second state is a state reflecting the exclusivity of said data item to a processor.

7. Method according to claim 6, in which said updating is launched only if said second state is a state reflecting the exclusivity of said data item to a processor.
